# EUROPEAN PATENT SPECIFICATION

(11) **EP 1 770 922 B1**
(45) Date of publication and mention of the grant of the patent: **31.12.2008**
(21) Application number: 06020089.6
(22) Date of filing: 26.09.2006
(51) Int. Cl.: H04L 12/56

(54) **Method and system for the reconfiguration of a network in order to improve the reliability of all communication links**
Verfahren und System zur Rekonfiguration eines Netzwerks um die Zuverlässigkeit aller Kommunikationslinks zu verbessern
Procédé et système pour la reconfiguration d'un réseau pour l'amélioration de la fiabilité de toutes les liaisons de communication

(30) Priority: 30.09.2005 US 241296
(43) Date of publication of application: 04.04.2007
(73) Proprietor: ROBERT BOSCH GMBH, 70442 Stuttgart (DE)
(72) Inventor: Manjeshwar, Arati, AZ 85226 Chandler (US); Hermann, Falk, NY 14450 Fairport (US)
(74) Representative: Knapp, Thomas

(56) References cited:
- WO-A-03/019964
- WO-A-20/04025472
- WO-A2-03/061176

## Description

### FIELD OF INVENTION

The present invention relates to a method and system for reconfiguring a communications network and to a wireless network according to the preambles of the independent claims..

### BACKGROUND INFORMATION

In wireless systems, it may be more energy efficient to use reliable links for communication, particularly, when mounting network node elements in ad-hoc wireless communications networks.

Battery operated wireless systems may communicate more if reliable links are used because such links may reduce errors in the communication, lost communications, retries, etc. The quality of the wireless links, however, may change dynamically and may also depend on environmental changes. In particular, the link quality may change significantly over time due to, for example, newly deployed system elements, new systems deployed that use the same wireless channel, or movement of physical obstacles (e.g., furniture or metal cabinets in offices), etc.

The 23rd Conference of the International Electronic and Electrical Engineers (IEEE) Communications Society held in Hong Kong March 7 to 11, 2004 (Infocom 2004) proposed an Optical Orthoganl Codeword (OOC) scheme to gather link quality, for an energy-efficient system in a purportedly very energy-efficient manner.

WO 03/061176 A2 discloses setting a network topology based on a link quality, based on the extent to which links experience packet retransmissions.

### SUMMARY OF THE INVENTION

The present invention provides a method of enhancing an operational aspect, in particular an operation lifetime of a wireless network and a wireless communications network, to improve network lifetime using the most reliable communication links, according to the independent claims.

An exemplary embodiment and/or exemplary method of the present invention may periodically update the link quality information of a wireless communications network, and based on this information make changes to the network topology (if required) to improve, enhance and/or prolong the network life.

According to an exemplary embodiment and/or exemplary method of the present invention, certain quality characteristics of the wireless links are collected periodically and the network topology of wireless nodes is changed (if required) so that the most reliable links are used. Consequently, errors in communication may be reduced, lost communications or retransmissions may be minimized, and longer uninterrupted communications may be achieved.

An exemplary embodiment and/or exemplary method of the present invention is directed to a method of enhancing an operational lifetime of a wireless network, the method including monitoring a link quality between node elements of the wireless network, periodically collecting information regarding the link quality between node elements of the wireless network, and reconfiguring a network topology of the wireless network based on the collected information.

Still another exemplary embodiment and/or exemplary method of the present invention is directed to a method of enhancing an operational lifetime of a wireless network, in which the information regarding the link quality includes an retransmission rate.

Yet another exemplary embodiment and/or exemplary method of the present invention is directed to a method of enhancing an operational lifetime of a wireless network, in which the network topology is reconfigured so that a link quality of an established communication path between the node elements is maximized.

Still another exemplary embodiment and/or exemplary method of the present invention is directed to a method of enhancing an operational lifetime of a wireless network, in which the established communication path is a preferred established communication path.

Yet another exemplary embodiment and/or exemplary method of the present invention is directed to a method of enhancing an operational lifetime of a wireless network, the method including detecting a shift in an adverse environmental condition that affects the link quality between node elements of the wireless network.

Still another exemplary embodiment and/or exemplary method of the present invention is directed to a method of enhancing an operational lifetime of a wireless network, the method including detecting a change in node elements of the wireless network, and updating the collected information based on the detected change in node elements.

Yet another exemplary embodiment and/or exemplary method of the present invention is directed to a method of enhancing an operational lifetime of a wireless network, in which at least one node element of the wireless network is energy constrained.

An exemplary embodiment and/or exemplary method of the present invention is directed to a wireless network, which includes a plurality of network node elements configured to communicate via communication links arranged accordingly to a network topology, an arrangement to monitor a link quality between each of the plurality of network node elements, an arrangement to periodically collect information regarding a link quality of the communication links, and an arrangement to reconfigure the network topology based on the collected information.

Another exemplary embodiment and/or exemplary method of the present invention is directed to a wireless network, in which at least one of the plurality of network elements is battery operated.

Yet another exemplary embodiment and/or exemplary method of the present invention is directed to a wireless network, in which the information regarding the link quality of the communication links include at least one of a measured signal strength, an error rate, and a retransmission rate.

Still another exemplary embodiment and/or exemplary method of the present invention is directed to a wireless network, in which the network topology is reconfigured so that a link quality of an established communication path between the node elements is maximized.

Yet another exemplary embodiment and/or exemplary method of the present invention is directed to a wireless network, in which the established communication path is a preferred established communication path.

Still another exemplary embodiment and/or exemplary method of the present invention is directed to a wireless network, which includes an arrangement to detect a shift in an adverse environmental condition that affects the link quality between at least two of the plurality of network node elements.

Another exemplary embodiment and/or exemplary method of the present invention is directed to a wireless network, which includes an arrangement to detect a change in the plurality of network node elements, and an arrangement to update the collected information based on the detected change of the plurality of network node elements.

An exemplary embodiment and/or exemplary of the present invention is directed to a method of improving an operational aspect of a wireless network, the method including monitoring a reliability of a communication path between each of a plurality of devices of the wireless network, periodically collecting information regarding the reliability of the communication links, and reconfiguring a network topology of the wireless network based on the collected information so that an expected reliability of an established communication path between the plurality of devices is maximized.

### BRIEF DESCRIPTION OF THE DRAWINGS

Figure 1 shows an exemplary wireless network that includes a base station and seven network nodes, and an adverse environmental condition located within the exemplary wireless network.
Figure 2 shows an exemplary network topology for the exemplary wireless network of Figure 1 prior to reconfiguration of network topology, in which the devices of the exemplary wireless network are arranged according to a predetermined preference for communicating with each other.
Figure 3 shows the exemplary wireless network of Figure 1 having undergone a change in link quality between network devices, which resulted from a shifting of the adverse environmental condition within the exemplary wireless network.
Figure 4 shows an exemplary network topology for the exemplary wireless network of Figure 2, which underwent a reconfiguration to accommodate the change in link quality between the first node and the fifth node, and the change in link quality between the base station and the sixth and seventh nodes.
Figure 5 shows an exemplary method of enhancing an operational lifetime of the exemplary wireless network of Figure 1, in which the network topology of the exemplary wireless network is changed to accommodate changing network conditions so that the most reliable links between the nodes are used.

### DETAILED DESCRIPTION

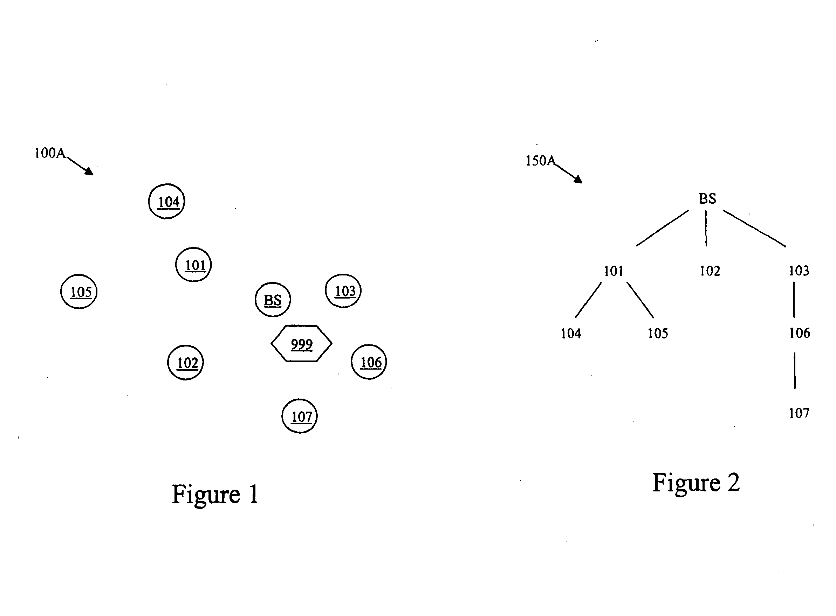

Figure 1 shows an exemplary wireless network 100, which includes a base station BS, a first node 101, a second node 102, a third node 103, a fourth node 104, a fifth node 105, a sixth node 106, and a seventh node 107. In this regard, the base station BS and seven network nodes 101 through 107 may be referred collectively as the "devices" of the exemplary wireless network 100. Here, it is assumed that at least some of the devices of the exemplary wireless network 100 are capable of communicating with each other, and measuring characteristics of a communications channel between devices. In particular, it is assumed that at least some of the devices of the exemplary wireless network 100 can measure a link quality between the base station BS and neighboring nodes, or between the nodes themselves. It is also assumed that at least some of the devices of the exemplary wireless network 100 are capable of determining a preferred communication path to communicate with other devices.

Figure 1 further shows an adverse environmental condition 999 existing within the exemplary wireless network 100. In particular, Figure 1 shows the adverse environmental condition 999 existing between the base station BS and the seventh node 107, and between the base station BS and the sixth node 106, which may prevent the establishment of a reliable link between the base station BS and the seventh node 107 or between the base station BS and the sixth node 106. In this regard, the environmental condition may be, for example, a physical object that blocks the signal path between the base station BS and the seventh node 107, and between the base station BS and the sixth node 106.

Figure 2 shows an exemplary network topology 150A for the exemplary wireless network 100 of Figure 1 prior to a reconfiguration of the network topology 150A, in which the devices of the exemplary wireless network 100 are arranged according to predetermined preference for communicating with each other. In particular, the exemplary network topology 150A shows the devices of the exemplary wireless network 100 arranged in a hierarchical manner to indicate a preferred path of communication between the devices. In this regard, a line between two devices indicates that a preferred communications link is established. For example, the line displayed between the base station BS and the first node 101 indicates a preferred communication link is established between the base station BS and the first node 101, and the line displayed between the first node 101 and the fifth node 105 indicates that a preferred communication link is established between the first node 101 and the fifth node 105. Accordingly, if the base station BS and the first node 101 wish to communicate with each other, they simply send a message directly to one another. Likewise, if the first node 101 and the fifth node 105 wish to communicate with each other, they too simply send a message directly to one another.

It is noted, however, that a line is not displayed between the base station BS and the fifth node 105. Accordingly, if the base station BS or the fifth node 105 wish to communicate with each other, they must communicate indirectly via the first node 101. That is, if the base station BS wishes to communicate a message to the fifth node 105, the base station BS sends the message intended for the fifth node 105 to the first node 101 via the preferred communication link established between the base station BS and the first node 101, and the first node 101 upon receiving the message intended for the fifth node 105 forwards the message to the fifth node 105 via the preferred communication link established between the first node 101 and the fifth node 105. Likewise, if the fifth node 105 wishes to communicate a message to the base station BS, the fifth node 105 sends the message intended for the base station BS to the first node 101 via the preferred communication link established between the fifth node 105 and the first node 101, and the first node 101 upon receiving the message intended for the base station BS forwards the message to the base station BS via the preferred communication link established between the first node 101 and the base station BS. Hence, the base station BS and the fifth node 105 do not communicate their messages directly, but rather indirectly via the first node 101. It is noted here that the base station BS and the fifth node 105 communicate indirectly via the first node 101, even if it is possible to established a direct communication link between the base station BS and the fifth node 105, since it has been previously determined that if a communication link were established between the base station BS and the fifth node 105, such a communication link was considered to be unacceptably reliable.

As a further example of the hierarchically arranged network topology 150A indicating the preferred path of communication, the line displayed between the base station BS and the third node 103 indicates that a preferred communication link is established between the base station BS and the third node 103, the line displayed between the third node 103 and the sixth node 106 indicates that a preferred communication link is established between the third node 103 and the sixth node 106, and the line displayed between the sixth node 106 and the seventh node 107 indicates that a preferred communication link is established between the sixth node 106 and the seventh node 107. Accordingly, if the base station BS and the third node 103 wish to communicate with each other, they simply send a message directly to one another. Likewise, if the third node 103 and the sixth node 106 wish to communicate with each other, they too simply send a message directly to one another. Likewise still, if the sixth node 106 and the seventh node 107 wish to communicate with each other, they too simply send a message directly to one another.

It is noted, however, that a line is not displayed between the third node 103 and the seventh node 107, and that a line is not displayed between the base station BS and the sixth node 106 or between the base station BS and the seventh node 107. Accordingly, if the base station BS and the seventh node 107 wish to communicate with each other, they must communicate indirectly via the third node 103 and the sixth node 106. That is, if the base station BS wishes to communicate a message to the seventh node 107, the base station BS sends the message intended for the seventh node 107 to the third node 103 via the preferred communication link established between the base station BS and the third node 103, and the third node 103 upon receiving the message intended for the seventh node 107 forwards the message to the sixth node 106 via the preferred communication link established between the third node 103 and the sixth node 106, and the sixth node 106 upon receiving the message intended for the seventh node 107 forwards the message to the seventh node 107 via the preferred communication link established between the sixth node 106 and the seventh node 107. Likewise, if the seventh node 107 wishes to communicate a message to the base station BS, the seventh node 107 sends the message intended for the base station BS to the sixth node 106 via the preferred communication link established between the seventh node 107 and the sixth node 106, and the sixth node 106 upon receiving the message intended for the base station BS forwards the message to the third node 103 via the preferred communication link established between the sixth node 106 and the third node 103, and the third node 103 upon receiving the message intended for the base station BS forwards the message to the base station BS via the preferred communication link established between the third node 103 and the base station BS. Hence, the base station BS and the seventh node 107 do not communicate their messages directly, but rather indirectly via the third node 103 and the sixth node 106.

It is also noted that the base station BS and the sixth node 106 communicate indirectly via the third node 103, despite the relatively close physical arrangement, due to, for example, the existence of the adverse environmental condition 999 arranged between the base station BS and the sixth node 106, which prevents the establishment of a reliable link between the base station BS and the sixth node 106. Likewise, the base station BS and the seventh node 107 communicate indirectly via the third node 103 and the sixth node 106 despite the relatively close physical arrangement due to, for example, the existence of the same adverse environmental condition 999, which is also arranged between the base station BS and the seventh node 107 and therefore prevents the establishment of a reliable link between the base station BS and the seventh node 107. It is also noted here that the adverse environmental condition 999 may be transitory. That is, the adverse environmental condition 999 may disappear or shift to a new location within the exemplary wireless network 100.

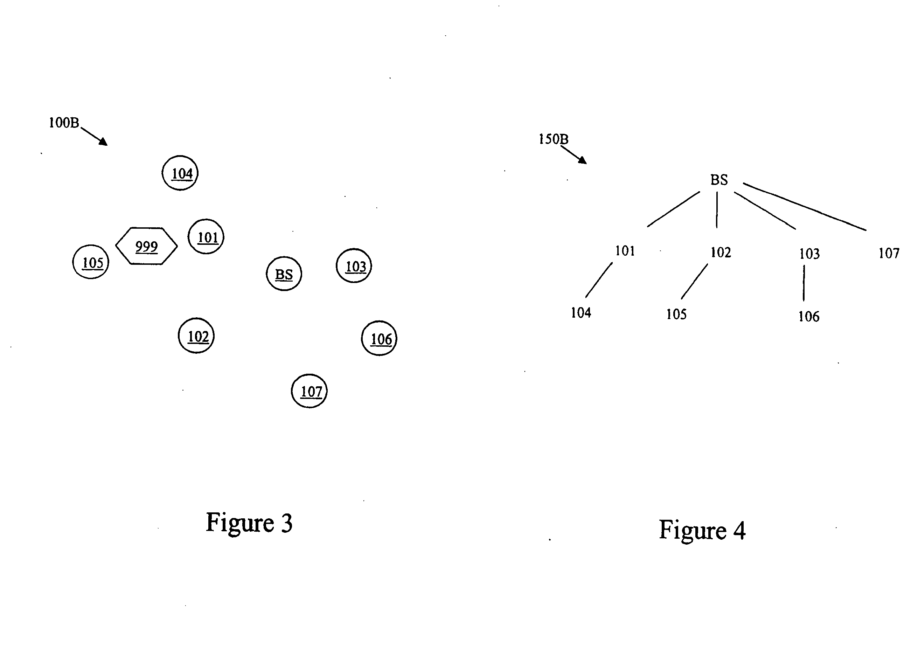

Figure 3 shows the exemplary wireless network 100 of Figure 1 having undergone a change in link quality between network devices, which resulted from a shifting of the adverse environmental condition 999 within the exemplary wireless network 100. In particular, the adverse environmental condition 999 shifted from being arranged between the base station BS and the sixth and seventh nodes 106/147 to being arranged between the first node 101 and the fifth node 105, which affected the link quality between the base station BS and the sixth and seventh node 106/107, and also the link quality between the first node 101 and the fifth node 105. In particular, with the change in adverse environmental condition 999, an improved link quality characteristics may be detected between the base station BS and the sixth node 106, and between the base station BS and the seventh node 107. Moreover, with the change in adverse environmental condition 999, poorer link quality characteristics may be detected between the first node 101 and the fifth node 105. In this regard, the change in link quality was detected, for example, by a periodic collection of information regarding certain quality characteristics of the wireless links between the devices so that based on this collected information, the network topology of wireless nodes may be configured such that the most reliable links between the nodes are used.

Figure 4 shows an exemplary network topology 150B for the exemplary wireless network 100 of Figure 2, which underwent a reconfiguration to accommodate the change in link quality between the first node 101 and the fifth node 105, and the change in link quality between the base station BS and the sixth and seventh nodes 106/107. In particular, the exemplary network topology 150B also shows that the line previously displayed between the first node 101 and the fifth node 105 is now removed indicating that a preferred communication link is no longer established directly between the first node 101 and the fifth node 105, and that a line was added between the second node 102 and the fifth node 105 indicating that a preferred communication link is now established directly between the second node 102 and the fifth node 105. According, if the base station BS and the fifth node 105 wish to communicate with each other, then must now communicate indirectly via the second node 103 rather than the first node 101. Likewise, the exemplary network topology 150B also shows that the line previously displayed between the sixth node 106 and the seventh node 107 is now removed indicating that a preferred communication link is no longer established directly between the sixth node 106 and the seventh node 107, and that a line was added between the base station BS and the seventh node 107 indicating that a preferred communication link has been established directly between the base station BS and the seventh node 107. Accordingly, if the base station BS and the seventh node 107 wish to communicate with each other, they simply send a message directly to one another, rather than via the third node 103.

It is noted that although the adverse environmental condition 999 no longer exists between the base station BS and the sixth node 106, as shown in Figure 3, the exemplary network topology 150B has not been reconfigured with respect to the preferred communication relationship between the base station and the sixth node 106. That is, the base station BS and the sixth node 106 do not establish a preferred communication link directly, but rather, continue to communicate indirectly via the third node 103. This is because the removal of the adverse environmental condition 999 between the base station BS and the sixth node 106 does not necessarily mean that a direct communication link between the base station BS and the sixth node 106 is the most reliable link. Rather, another indirect path may still prove to be the most reliable, which in this instance, is the combination of the preferred communication link established between the sixth node 106 and the third node 103, and the preferred communication link established between the third node 103 and the base station BS.

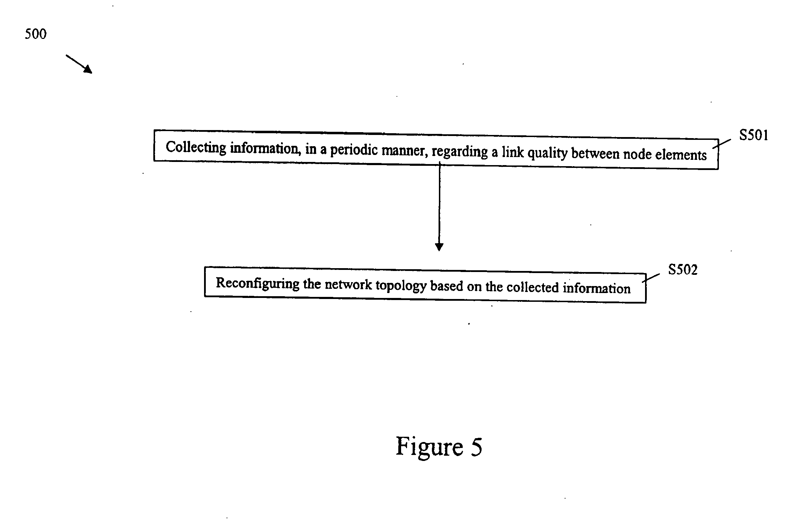

Figure 5 shows an exemplary method 500 of enhancing an operational lifetime of the exemplary wireless network 100 of Figure 1, in which the network topology of the exemplary wireless network 100 is changed to accommodate changing network conditions so that the most reliable links between the nodes are used. The following steps S501 to S504 of the exemplary method 500 are described below.

In step S501, information is periodically collected regarding a link quality between the devices of the exemplary wireless network 100. For example, information regarding a link quality between the base station BS and each of the seven network nodes 101 to 107, and/or between the network nodes themselves, is collected periodically and analyzed to determine which links are, or should be, the most reliable, and which links are, or are likely to be, the least reliable.

In step S502, the network topology of the exemplary wireless network 100 is reconfigured based on the collected information. For example, if it is determined from the collected information that a certain link previously considered to be the most reliable now becomes relatively unreliable, due to, for example, a negatively affecting change in an adverse environmental condition, or that a certain link previously considered to be relatively unreliable now becomes the most reliable, due to, for example, a positively affecting change in an adverse environmental condition, the network topology of the exemplary wireless network 100 may be reconfigured to accommodate these changed conditions. In particular, the established preferred communication links may be adjusted to reflect the change in link quality.

## Claims

1. A communications system comprising:
a communication network (100) including a plurality of devices, the plurality of devices including a base station (BS) and a plurality of nodes (101-107), wherein at least some of the devices are configured to:
periodically collect information regarding link quality between the plurality of devices (101-107), wherein the information includes at least one of retransmission rate information and a measured signal strength; and **characterized in that**,
in accordance with the collected information, dynamically arrange the plurality of devices (101-107) in a hierarchical topology (150A) that specifies preferred communication paths via which the plurality of devices (101-107) are to communicate with each other, each communication path including one or more direct communication links between respective sets of two of the plurality of devices (101-107), the hierarchical topology (150A) dynamically changing in accordance with changes in the collected information.

2. The communications system of claim 1, wherein the information regarding the link quality includes the retransmission rate information.

3. The communications system of claim 1, wherein the information regarding the link quality includes the measured signal strength.

4. The communications system of any of claims 1 to 3,
wherein the at least some of the devices (101-107) are configured to perform the arrangement of the plurality of devices (101-107) in the hierarchical topology (150A) according to at least one of a determination of which potential direct communication links are most likely to be most reliable and a determination of which potential direct communication links are most likely to be least reliable.

5. The communications system of any of claims 1 to 4,
wherein the communication network is a wireless communication network (100).

6. The communications system of any of claims 1 to 5,
wherein the at least some of the devices (101-107) are configured to perform the arrangement of the plurality of devices (101-107) in the hierarchical topology (150A) in a manner that maximizes the link quality between the plurality of devices (101-107).

7. The communications system of claim 1, wherein a change in link quality occurs due to a shift of an adverse environmental condition (999).

8. The communications system of claim 1, wherein the at least some of the devices (101-107) are configured to change the arrangement of the plurality of devices (101-107) in the hierarchical topology (150A) even without a change in physical positions of the plurality of devices (101-107).

9. The communications system of claim 1, wherein the system is configured to detect a change in the plurality of devices (101-107), and update the collected information based on the detected change in the plurality of devices (101-107).

10. The communications system of claim 1, wherein at least one of the plurality of devices (101-107) is energy constrained.

11. The communications system of claim 1, wherein at least one of the plurality of devices (101-107) is battery operated.

12. A method of controlling a communication network (100) that includes a plurality of devices, the plurality of devices including a base station (BS) and a plurality of nodes (101-107), the method comprising the steps of:
at least some of the devices (101-107) periodically collecting information regarding link quality between the plurality of devices (101-107), wherein the information includes at least one of retransmission rate information and a measured signal strength; and **characterized in that**,
in accordance with the collected information, the at least some of the devices (101-107) dynamically arranging the plurality of devices (101-107) in a hierarchical topology (150A) that specifies preferred communication paths via which the plurality of devices (101-107) can communicate with each other, each communication path including one or more direct communication links between respective sets of two of the plurality of devices (101-107), the hierarchical topology (150A) dynamically changing in accordance with changes in the collected information.

13. The method of claim 12, wherein the information regarding the link quality includes the retransmission rate information.

14. The method of claim 12, wherein the information regarding the link quality includes the measured signal strength.

15. The method of any of claims 12 to 14, further comprising:
at least one of determining which potential direct communication links are most likely to be most reliable and determining which potential direct communication links are most likely to be least reliable, wherein the arrangement of the plurality of devices (101-107) in the hierarchical topology (150A) is performed according to the at least one determination.

16. The method of any of claims 12 to 15, wherein the communication network is a wireless communication network (100).

17. The method of any of claims 12 to 16, wherein the arrangement of the plurality of devices (101-107) in the hierarchical topology (150A) is performed in a manner that maximizes the link quality between the plurality of devices (101-107).

18. The method of claim 12, wherein a change in link quality occurs due to a shift of an adverse environmental condition (999).

19. The method of claim 12, wherein the arrangement of the plurality of devices (101-107) in the hierarchical topology (150A) even without a change in physical positions of the plurality of devices (101-107).

20. The method of claim 12, further comprising:
detecting a change in the plurality of devices (101-107); and
updating the collected information based on the detected change in the plurality of devices (101-107).

21. The method of claim 12, wherein at least one of the plurality of devices (101-107) is energy constrained.

22. The method of claim 12, wherein at least one of the plurality of devices (101-107) is battery operated.

## Patentansprüche

1. Kommunikationssystem, das umfasst:
ein Kommunikationsnetz (100), das mehrere Vorrichtungen enthält, wobei die mehreren Vorrichtungen eine Basisstation (BS) und mehrere Knoten (101-107) umfassen, wobei wenigstens einige der Vorrichtungen konfiguriert sind, um:
periodisch Informationen bezüglich der Übertragungsstreckenqualität zwischen den mehreren Vorrichtungen (101-107) zu sammeln, wobei die Informationen Neuübertragungsraten-Informationen und/oder eine gemessene Signalstärke umfassen;
**dadurch gekennzeichnet, dass**
in Übereinstimmung mit den gesammelten Informationen die mehreren Vorrichtungen (101-107) in einer hierarchischen Topologie (150A), die bevorzugte Kommunikationswege spezifiziert, über die die mehreren Vorrichtungen (101-107) miteinander kommunizieren sollen, dynamisch angeordnet werden, wobei jeder Kommunikationsweg eine oder mehrere direkte Kommunikationsübertragungsstrecken zwischen jeweiligen Gruppen aus zwei der mehreren Vorrichtungen (101-107) enthält, wobei sich die hierarchische Topologie (150A) in Übereinstimmung mit Änderungen der gesammelten Informationen dynamisch ändert.

2. Kommunikationssystem nach Anspruch 1, wobei die Informationen bezüglich der Übertragungsstreckenqualität die Neuübertragungsraten-Informationen enthalten.

3. Kommunikationssystem nach Anspruch 1, wobei die Informationen bezüglich der Übertragungsstreckenqualität die gemessene Signalstärke enthalten.

4. Kommunikationssystem nach einem der Ansprüche 1 bis 3, wobei die wenigstens einigen Vorrichtungen (101-107) konfiguriert sind, um die Anordnung der mehreren Vorrichtungen (101-107) in der hierarchischen Topologie (150A) in Übereinstimmung mit einer Bestimmung, welche potentiellen direkten Kommunikationsübertragungsstrecken am wahrscheinlichsten am zuverlässigsten sind, und/oder einer Bestimmung, welche potentiellen direkten Kommunikationsübertragungsstrecken am wahrscheinlichsten am wenigstens zuverlässig sind, auszuführen.

5. Kommunikationssystem nach einem der Ansprüche 1 bis 4, wobei das Kommunikationsnetz ein drahtloses Kommunikationsnetz (100) ist.

6. Kommunikationssystem nach einem der Ansprüche 1 bis 5, wobei die wenigstens einigen Vorrichtungen (101-107) konfiguriert sind, um die Anordnung der mehreren Vorrichtungen (101-107) in der hierarchischen Topologie (150A) in einer Weise auszuführen, in der die Übertragungsstreckenqualität zwischen den mehreren Vorrichtungen (101-107) maximal ist.

7. Kommunikationssystem nach Anspruch 1, wobei eine Änderung der Übertragungsstreckenqualität aufgrund einer Veränderung einer nachteiligen Umgebungsbedingung (999) auftritt.

8. Kommunikationssystem nach Anspruch 1, wobei die wenigstens einigen Vorrichtungen (101-107) konfiguriert sind, um die Anordnung der mehreren Vorrichtungen (101-107) in der hierarchischen Topologie (150A) selbst ohne Änderung der physikalischen Positionen der mehreren Vorrichtungen (101-107) zu ändern.

9. Kommunikationssystem nach Anspruch 1, wobei das System konfiguriert ist, um eine Änderung der mehreren Vorrichtungen (101-107) zu erfassen und um die gesammelten Informationen anhand der erfassten Änderung der mehreren Vorrichtungen (101-107) zu aktualisieren.

10. Kommunikationssystem nach Anspruch 1, wobei in wenigstens einer der mehreren Vorrichtungen (101-107) die Energie begrenzt ist.

11. Kommunikationssystem nach Anspruch 1, wobei wenigstens eine der mehreren Vorrichtungen (101-107) batteriebetrieben ist.

12. Verfahren zum Steuern eines Kommunikationsnetzes (100), das mehrere Vorrichtungen enthält, wobei die mehreren Vorrichtungen eine Basisstation (BS) und mehrere Knoten (101-107) umfassen, wobei das Verfahren die folgenden Schritte umfasst:
wenigstens einige der Vorrichtungen (101-107) sammeln periodisch Informationen bezüglich der Übertragungsstreckenqualität zwischen den mehreren Vorrichtungen (101-107), wobei die Informationen Neuübertragungsraten-Informationen und/oder eine gemessene Signalstärke enthalten;
**dadurch gekennzeichnet, dass**
in Übereinstimmung mit den gesammelten Informationen die wenigstens einigen Vorrichtungen (101-107) die mehreren Vorrichtungen (101-107) in einer hierarchischen Topologie (150A), die bevorzugte Kommunikationswege spezifiziert, über die die mehreren Vorrichtungen (101-107) miteinander kommunizieren können, dynamisch anordnen, wobei jeder Kommunikationsweg eine oder mehrere direkte Kommunikationsübertragungsstrecken zwischen jeweiligen Gruppen aus zwei der mehreren Vorrichtungen (101-107) enthalten, wobei sich die hierarchische Topologie (150A) in Übereinstimmung mit Änderungen in den gesammelten Informationen dynamisch ändert.

13. Verfahren nach Anspruch 12, wobei die Informationen bezüglich der Übertragungsstreckenqualität die Neuübertragungsraten-Informationen enthalten.

14. Verfahren nach Anspruch 12, wobei die Informationen bezüglich der Übertragungsstreckenqualität die gemessene Signalstärke enthalten.

15. Verfahren nach einem der Ansprüche 12 bis 14, das ferner umfasst:
Bestimmen, welche potentiellen direkten Kommunikationsübertragungsstrecken am wahrscheinlichsten am zuverlässigsten sind, und/oder Bestimmen, welche potentiellen direkten Kommunikationsübertragungsstrecken am wahrscheinlichsten am wenigsten zuverlässig sind, wobei die Anordnung der mehreren Vorrichtungen (101-107) in der hierarchischen Topologie (150A) in Übereinstimmung mit wenigstens einer der Bestimmungen ausgeführt wird.

16. Verfahren nach einem der Ansprüche 12 bis 15, wobei das Kommunikationsnetz ein drahtloses Kommunikationsnetz (100) ist.

17. Verfahren nach einem der Ansprüche 12 bis 16, wobei die Anordnung der mehreren Vorrichtungen (101-107) in der hierarchischen Topologie (150A) in einer Weise ausgeführt wird, in der die Übertragungsstreckenqualität zwischen den mehreren Vorrichtungen (101-107) maximal wird.

18. Verfahren nach Anspruch 12, wobei eine Änderung der Übertragungsstreckenqualität aufgrund einer Veränderung einer nachteiligen Umgebungsbedingung (999) auftritt.

19. Verfahren nach Anspruch 12, in der die Anordnung der mehreren Vorrichtungen (101-107) in der hierarchischen Topologie (150A) selbst ohne Änderung der physikalischen Positionen der mehreren Vorrichtungen (101-107) geändert wird.

20. Verfahren nach Anspruch 12, das ferner umfasst:
Erfassen einer Änderung in den mehreren Vorrichtungen (101-107); und
Aktualisieren der gesammelten Informationen anhand der erfassten Änderung in den mehreren Vorrichtungen (101-107).

21. Verfahren nach Anspruch 12, wobei in wenigstens einer der mehreren Vorrichtungen (101-107) die Energie begrenzt ist.

22. Verfahren nach Anspruch 12, wobei wenigstens eine der mehreren Vorrichtungen (101-107) batteriebetrieben ist.

## Revendications

1. Système de communication comprenant :
un réseau de communication (100) ayant un ensemble de dispositifs, cet ensemble de dispositifs comprenant une station de base (BS) et un ensemble de noeuds (101-107),
dans lequel au moins certains des dispositifs sont configurés pour collecter périodiquement des informations concernant la qualité de la liaison entre l'ensemble des dispositifs (101-107), et contenant au moins une information de taux de retransmission et l'intensité mesurée du signal,
**caractérisé en ce que**
selon l'information collectée, on organise de manière dynamique l'ensemble des dispositifs (101-107) suivant une topologie hiérarchisée (150A) qui spécifie les chemins de communication préférentiels par l'intermédiaire desquels l'ensemble des dispositifs (101-107) communiquent entre eux, chaque chemin de communication ayant un ou plusieurs liens de communication directe entre les groupes respectifs de deux dispositifs de l'ensemble de dispositifs (101-107), la topologie hiérarchisée (150A) changeant de manière dynamique en fonction des changements de l'information collectée.

2. Système de communication selon la revendication 1, **caractérisé en ce que** l'information concernant la qualité de la liaison contient l'information de taux de retransmission.

3. Système de communication selon la revendication 1, **caractérisé en ce que** l'information concernant la qualité de la liaison contient l'intensité mesurée du signal.

4. Système de communication selon l'une quelconque des revendications 1 à 3, **caractérisé en ce qu'** au moins certains des dispositifs (101-107) sont configurés pour arranger l'ensemble des dispositifs (101-107) suivant la topologie hiérarchisée (150A) selon au moins une détermination des liaisons de communication directe potentielles qui sont probablement les plus fiables et une détermination des liaisons de communication potentielles directes qui sont probablement les moins fiables.

5. Système de communication selon l'une quelconque des revendications 1 à 4, dans lequel le réseau de communication est un réseau de communication sans fil (100).

6. Système de communication selon l'une quelconque des revendications 1 à 5, **caractérisé en ce qu'** au moins certains des dispositifs (101-107) sont configurés pour effectuer l'arrangement de l'ensemble des dispositifs (101-107) suivant une topologie hiérarchisée (150A) de façon à rendre maximale la qualité de la liaison entre l'ensemble des dispositifs (101-107).

7. Système de communication selon la revendication 1, dans lequel un changement de qualité de liaison résulte d'un décalage d'une condition environnementale défavorable (999).

8. Système de communication selon la revendication 1, **caractérisé en ce qu'** au moins certains des dispositifs (101-107) sont configurés pour modifier le changement de l'ensemble des dispositifs (101-107) de la topologie hiérarchisée (105A) même en l'absence de changement des positions physiques de l'ensemble des dispositifs (101-107).

9. Système de communication selon la revendication 1, dans lequel le système est configuré pour détecter un changement de l'ensemble des dispositifs (101-107) et mettre à jour les informations collectées fondées sur le changement détecté dans l'ensemble des dispositifs (101-107).

10. Système de communication selon la revendication 1, dans lequel au moins l'un des ensembles de dispositifs (101-107) est à énergie limitée.

11. Système de communication selon la revendication 1, dans lequel l'un des ensembles de dispositifs (101-107) fonctionne avec une batterie.

12. Procédé de commande d'un réseau de communication (100) comportant un ensemble de dispositifs, cet ensemble de dispositifs comprenant une station de base (BS) et un ensemble de noeuds (101-107), procédé comprenant les étapes suivantes :
au moins certains des dispositifs (101-107) collectent périodiquement des informations concernant la qualité de liaison entre l'ensemble des dispositifs (101-107), l'information comprenant au moins une information de taux de retransmission et une intensité mesurée de signal,
**caractérisé en ce qu'**
en fonction de l'information collectée, au moins certains des dispositifs (101-107) arrangent de manière dynamique l'ensemble des dispositifs (101-107) suivant une topologie hiérarchisée (150A) qui indique les chemins de communication préférentiels par lesquels l'ensemble des dispositifs (101-107) peuvent communiquer entre eux, chaque chemin de communication comportant une ou plusieurs liaisons de communication directe entre les groupes respectifs de deux des dispositifs de l'ensemble de dispositifs (101-107), la topologie hiérarchisée (150A) changeant de manière dynamique en fonction des changements dans l'information collectée.

13. Procédé selon la revendication 12, selon lequel l'information concernant la qualité de la liaison contient l'information de taux de retransmission.

14. Procédé selon la revendication 12, selon lequel l'information concernant la qualité de la liaison contient l'intensité mesurée du signal.

15. Procédé selon l'une des revendications 12 à 14, comprenant en outre :
au moins la détermination des liaisons de communication directe potentielles de plus grande fiabilité la plus probable ou la détermination des liaisons de communication directe potentielles les moins fiables de la manière la plus probable, l'arrangement de l'ensemble des dispositifs (101-107) dans la topologie hiérarchisée (150A) étant fait en fonction d'au moins une détermination.

16. Procédé selon l'une des revendications 12 à 15, selon lequel le réseau de communication est un réseau de communication sans fil (100).

17. Procédé selon l'une des revendications 12 à 16, selon lequel l'arrangement de l'ensemble des dispositifs (101-107) dans la topologie hiérarchisée (150A) est réalisé de façon à rendre maximale la qualité de la liaison entre l'ensemble des dispositifs (101-107).

18. Procédé selon la revendication 12, selon lequel un changement de la qualité de la liaison résulte d'un décalage des conditions d'environnement défavorables (999).

19. Procédé selon la revendication 12, selon lequel l'arrangement de l'ensemble des dispositifs (101-107) dans la topologie hiérarchisée (150A) se fait même sans un changement des positions physiques de l'ensemble des dispositifs (101-107).

20. Procédé selon la revendication 12, comprenant en outre :
la détection d'un changement dans l'ensemble des dispositifs (101-107) et
la mise à jour de l'information collectée fondée sur le changement détecté de l'ensemble des dispositifs (101-107).

21. Procédé selon la revendication 12, selon lequel au moins l'un des ensemble des dispositifs (101-107) est limité en énergie.

22. Procédé selon la revendication 12, selon lequel au moins un des ensembles des dispositifs (101-107) est alimenté par batterie.
